# EUROPÄISCHE PATENTSCHRIFT

(11) **EP 0 918 940 B1**
(45) Veröffentlichungstag und Bekanntmachung des Hinweises auf die Patenterteilung: **04.07.2001**
(21) Anmeldenummer: 97941927.2
(22) Anmeldetag: 08.08.1997
(51) Int. Cl.: F16B 5/00

(54) **VERBINDUNG ZWISCHEN ZWEI BAUTEILEN**
CONNECTION BETWEEN TWO BUILDING ELEMENTS
RACCORDEMENT DE DEUX ELEMENTS CONSTITUTIFS

(30) Priorität: 22.08.1996 DE 19633977
(43) Veröffentlichungstag der Anmeldung: 02.06.1999
(73) Patentinhaber: BSH Bosch und Siemens Hausgeräte GmbH, 81669 München (DE)
(72) Erfinder: MADER, Alfred, D-89428 Syrgenstein (DE)
(74) Vertreter: Thoma, Lorenz
(86) Internationale Anmeldenummer: EP9704339
(87) Internationale Veröffentlichungsnummer: WO9807994

(56) Entgegenhaltungen:
- GB-A- 2 167 463
- US-A- 5 558 458

## Beschreibung

Die Erfindung betrifft eine Vorrichtung umfassend zwei miteinander verbundene, in ihrer Verbindungsebene weitestgehend aneinander anliegende Bauteile, von denen zumindest eines mit einer herausgestellt angeordneten, plastisch verformbaren Zunge versehen ist, welche das zweite Bauteil in einem Durchbruch durchdringt und welche im Durchdringungszustand derart plastisch verformt ist, dass die verbindenden Bauteile kraftund/oder formschlüssig zusammengehalten sind.

Bei dünnwandigen Blechteilen ist es gängig, diese durch Verlappen oder Verschränken miteinander zu verbinden. Bei diesen Verbindungstechniken wird einer der Verbindungspartner mit einem Lappen ausgestattet, welche den anderen Verbindungspartner in einem weitestgehend auf die Lappenabmessungen abgestimmten Verlappungsdurchbruch durchdringt und welcher im Fall der verlappenden Verbindungstechnik umgebogen ist, während er bei einer durch Verschränken hergestellten Verbindung nicht umgebogen sondern in sich selbst verdreht ist. Durch die letztere Verbindungsart ist eine form- und kraftschlüssige Verbindung zwischen beiden Verbindungspartner hergestellt, welche im allgemeinen fester als die durch Verlappen erzeugte Verbindung ist, jedoch eine größere Bauhöhe aufweist und zudem durch den verschränkten, herausragenden Lappen eine gewisse Verletzungsgefahr in sich birgt, so dass diese Verbindungstechnik nur an verdeckt angeordneten Verbindungsstellen Anwendung findet. Der Erfindung liegt die Aufgabe zugrunde, eine Verbindung gemäß dem Oberbegriff des Anspruches 1 mit einfachen konstruktiven Maßnahmen derart zu verbessern, dass eine feste Verbindung zwischen beiden Verbindungspartnern herstellbar ist und zugleich die Nachteile des Standes der Technik vermieden sind.

Diese Aufgabe wird gemäß der Erfindung dadurch gelöst, dass beide Bauteile mit einer herausgestellt angeordneten Zunge versehen sind, welche eine annähernd gleiche Ausstellrichtung aufweisen und verschieden lang ausgebildet sind, wobei die kürzere der Zungen zumindest im Nahbereich des Durchbruches angeordnet und in einer annähernd parallelen Ebene zu der den Durchbruch durchdringenden, unverformten längeren Zunge liegt, welche gegen das freie Ende der kürzeren Zunge abgebogen ist.

Durch die erfindungsgemäße Lösung ist eine Verbindungstechnik zwischen zwei Bauteilen bereitgestellt, welche einen festen form- und kraftschlüssigen Verbund zwischen beiden Verbindungspartnern bewirkt und welche einen flachen, mit vernachlässigbarem Verletzungspotential beaufschlagten Aufbau aufweist. Außerdem dienen die im wesentlichen eine gleiche Ausstellrichtung aufweisenden Zungen als eine Art Führung beim Zusammenfügen der zu verbindenden Bauteile.

Besonders einfach herstellbar, aber dennoch besonders positionsgenau der kürzeren Zunge zuordenbar ist der Durchbruch, wenn nach einer vorteilhaften Ausgestaltung des Gegenstandes der Erfindung vorgesehen ist, dass der Durchbruch durch Herausstellen der kürzeren Zunge aus einem dünnwandigen, plastisch verformbaren Bereich an einem der Bauteile erzeugt ist.

Nach einer weiteren bevorzugten Ausführungsform des Gegenstandes der Erfindung ist vorgesehen, dass der Durchbruch mit seinem der Wurzel der kürzeren Zunge gegenüberliegenden Rand als Anschlag für den Zungenkörper der längeren Zunge dient.

Hierdurch lässt sich auf besonders einfache Weise bereits beim Zusammenfügen der beiden Bauteile ohne Anwendung einer Montagevorrichtung eine ziemlich präzise Lagezuordnung der zu verbindenden Bauteile erzielen.

Besonders einfach und kostengünstig fertigbar sind die Zungen an beiden Bauteilen, wenn nach einer nächsten vorteilhaften Ausgestaltung des Gegenstandes der Erfindung vorgesehen ist, dass jede der Zungen durch spanloses Ausschneiden aus einem dünnwandigen, plastisch verformbaren Bereich der Bauteile herausgestellt sind.

Eine besonders gezielte und genaue Führung beim Zusammenfügen der Bauteile für die beiden Zungen ergibt sich, wenn gemäß einer nächsten bevorzugten Ausführungsform des Gegenstandes der Erfindung vorgesehen ist, dass die beiden Zungen bezüglich des dünnwandigen Bereiches einen annähernd identischen Zwischenwinkel aufweisen. Ferner wird durch den weitestgehend identischen Zwischenwinkel bewirkt, dass die beiden Zungen im Fügezustand im wesentlichen flächig aneinanderliegen, so dass das Abwinkeln der längeren Zunge gegen das Ende der kürzeren Zunge deutlich erleichtert ist.

Gute Fügeeigenschaften zwischen beiden Bauteilen ergeben sich, wenn gemäß einer nächsten bevorzugten Ausführungsform des Gegenstandes der Erfindung vorgesehen ist, dass die beiden Zungen bezüglich des dünnwandigen Bereiches einen Zwischenwinkel zwischen 10° und 90° einschließen, jedoch der Zwischenwinkel vorzugsweise 30° beträgt. Darüber hinaus ergibt sich bei Zwischenwinkeln zwischen 10 und 45° eine besonders genaue Lagezuordnung der zusammenzufügenden Bauteile, wobei die längeren Zungen bei diesen Zwischenwinkeln eine Art Zuführeinrichtung für das mit den kürzeren Zungen ausgestattete Bauteil zur Verbindungsebene bilden und bei vertikal ausgerichteten Bauteilen als Träger für das mit den kürzeren Zungen ausgestattete Bauteil geeignet sind, so dass sich ein Vormontage-Fügezustand mit sehr präziser Lagezuordnung der beiden Bauteile zueinander ergibt.

Mit einer fertigungstechnisch wirtschaftlich zu bewerkstelligenden Umformkraft lassen sich die längeren Zungen gegen das freie Ende der kürzeren Zungen abbiegen, wenn gemäß einer weiteren bevorzugten Ausführungsform des Gegenstandes der Erfindung vorgesehen ist, dass die längere Zunge zu der kürzeren Zunge einen Längenunterschied zwischen 100% und 600 % aufweist, aber vorzugsweise einen Längenunterschied von 400 % besitzt.

Eine besonders stabile und mit hoher Fügegenauigkeit herzustellende Verbindung zwischen beiden Bauteilen ergibt sich, wenn entsprechend einer nächsten vorteilhaften Ausgestaltung des Gegenstandes der Erfindung vorgesehen ist, dass die kürzere Zunge und die längere Zunge annähernd eine gleiche Zungenbreite aufweisen.

Gemäß einer nächsten bevorzugten Ausführungsform des Gegenstandes der Erfindung ist vorgesehen, dass die längere Zunge innerhalb ihrer Breite, in ihrem Umformbereich einen Durchbruch aufweist.

Durch eine derartige, das Flächenträgheitsmoment der Zunge vermindernde Maßnahme wird die Umformkraft auf einfache Weise bereits deutlich erniedrigt.

Nach einer weiteren bevorzugten Ausführungsform des Gegenstandes der Erfindung ist vorgesehen, dass der Durchbruch symmetrisch zur Breite der längeren Zunge angeordnet ist.

Durch eine derartige Ausbildung und Anordnung des Durchbruches entstehen innerhalb des Umformbereiches der Zunge zwei annähernd gleich breite Stege, welche einer annähernd gleiche Materialermüdung bei einem mehrmaligen Herstellen und wieder Auflösen der Verbindung unterliegen, so dass die Verbindung nicht durch einen vorzeitigen Ermüdungsbruch eines durch die Anordnung des Durchbruches entstandenen schmäleren Steges zerstört ist.

Besonders zweckmäßig sind die Zungen ausgebildet, wenn gemäß einer letzten bevorzugten Ausführungsform des Gegenstandes der Erfindung vorgesehen ist, dass die Zungen weitestgehend ebenflächig ausgebildet sind.

Die Erfindung ist in der nachfolgenden Beschreibung anhand eines in der beigefügten Zeichnung vereinfacht dargestellten Ausführungsbeispieles erläutert.

Es zeigen
- Fig. 1: ausschnittsweise zwei miteinander durch eine Lappenverbindung zu verbindende, im Loszustand dargestellte Bauteile, etwa im natürlichen Maßstab, in raumbildlicher Darstellung von vorne,
- Fig. 2: die Bauteile etwa im natürlichen Maßstab, im miteinander durch eine Lappenverbindung verbundenen Zustand, in raumbildlicher Darstellung von vorne und
- Fig. 3: die Bauteile gemäß Fig. 2, geschnitten entlang der Schnittlinie III-III in Seitenansicht.

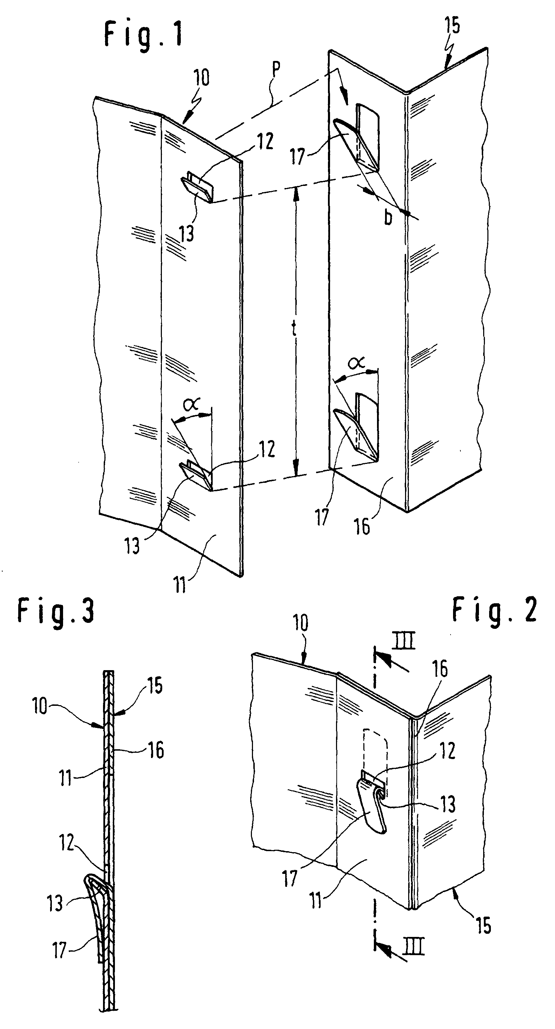

Gemäß Figur 1 ist ein beispielsweise zu einem nicht dargestellten Kältegeräteverflüssiger gehörendes Bauteil 10 gezeigt, welches aus dünnwandigem, plastisch verformbaren Blech gefertigt ist und welches innerhalb eines abgekanteten Abschnitts 11 zwei mit Abstand fluchtend übereinander angeordnete Durchbrüche 12 aufweist. Von diesen ist jeder durch ein gleichsinniges Herausstellen eines als Zunge 13 dienenden Lappens erzeugt, welcher beispielsweise wie im vorliegenden Fall durch ein Schneidewerkzeug mit einer Schnittplatte und einem Schneidstempel hergestellt ist, welcher die Zunge 13 aus dem dünnwandigen, plastisch verformbaren Blech schneidet und gleichzeitig aus dessen Ebene heraus entlang der Zungenwurzel abwinkelt. Die abgewinkelten Zungen 13 weisen in Einbaulage des Bauteiles 10 nach oben und schließen einen Zwischenwinkel α von 30° zwischen sich und der sichtbaren Frontfläche des Abschnittes 11 ein.

Das Bauteil 10 ist mit einem weiteren Bauteil 15 verbindbar, welches beispielsweise einen Ausschnitt eines zur Rückseite eines nicht dargestellten Kältegerätes hin abgewinkelten Randstreifen einer Seitenwand-Blechplatine dieses Kältegerätes darstellt. Das Bauteil 15 ist wie das Bauteil 10 aus dünnwandigem, plastisch verformbaren Blechen gebildet und weist einen abgewinkelten Abschnitt 16 auf, welcher parallel zum Abschnitt 11 am Bauteil 10 ausgerichtet ist. Der Abschnitt 16 ist mit in vertikalen Abständen übereinander angeordneten, in einer Flucht liegenden und herausgestellt angeordneten Zungen 17 versehen, welche wie die Zungen 13 einen Zwischenwinkel α von 30° zwischen sich und der Frontfläche des Abschnittes 16 einschließen und welche einen gleichen Teilungsabstand "t" wie die Zungen 13 aufweisen. Die Zungen 17 sind nach dem gleichen Herstellverfahren wie die Zungen 13 erzeugt und weisen wie diese mit ihrem freien Ende aufwärts, wodurch die Zungen 17 bei darauf angeordnetem Bauteil 10 als Träger für dieses dienen. Im Unterschied zu den Zungen 13 sind die Zungen 17 mit einem deutlich längeren Zungenkörper ausgestattet, welcher hinsichtlich seiner Breite b derart bemessen ist, dass sich die Zungen 17 mit geringem seitlichen Spiel in die Durchbrüche 12 einfügen lassen und im Fügezustand darin seitlich geführt sind.

Zum Verbinden der beiden Bauteile 10 und 15 wird das lose, beispielsweise als Verflüssiger eines Kältegerätes ausgebildete Bauteil 10 in Richtung der Pfeiles P auf das ortsfeste, beispielsweise die Rückwand eines Kältegerätes darstellende Bauteil 15 derart zubewegt, dass seine Durchbrüche 12 von den Zungen 17 des Bauteiles 15 durchdrungen sind. Diese bewirken aufgrund ihrer durch den Zwischenwinkel α aus der Ebene des Abschnittes 16 herausgekippten Zustandes und dem Einfluss des Eigengewichtes des Bauteiles 10 eine Art selbständige Zuführung des Abschnittes 11 zum Abschnitt 16, wobei die Zuführung durch ein Entlanggleiten der dem freien Ende der Zunge 13 zugewandten Seite des Durchbruches 12 entlang dem vom Bauteil 10 abgewandten Zungenrücken der Zungen 17 bewerkstelligt ist. Im zusammengefügten Zustand wird das Bauteil 10 von den Zungen 17 getragen, für welche sich zu diesem Zweck und zum Zwecke der selbsttätigen Zuführung eine Abwinklung aus der Ebene des Abschnittes 16 um einen Zwischenwinkel α von 30° bereits gute Ergebnisse gebracht hat.

Wie aus Fig. 2 und 3 ersichtlich ist, sind die längeren, die Durchbrüche 12 durchdringenden Zungen 17 um das freie Ende der kürzeren Zungen 13 ähnlich eines Falzes herumgebogen und liegen mit ihrem freien Ende wiederum an der Frontseite des Abschnittes 11 an (siehe hierzu insbesondere Fig. 3).

Im verbundenen Zustand sind die beiden Bauteile 10 und 15 an den sich berührenden Flächen ihrer Abschnitte 11 und 16 durch die Umfalzung der längeren Zungen 17 nicht nur ohne Spiel zusammengehalten sondern gleichzeitig auch spielfrei sowohl in Längsrichtung der Abschnitte 11 und 16 als auch quer dazu fixiert. Zur Herstellung der Falzung an den längeren Zungen 17 hat sich für diese eine um Faktor 4 gegenüber der Länge der Zunge 13 vergrößerte Länge als sehr brauchbar erwiesen. Zur Verringerung der beim Falzvorgang der längeren Zungen 17 aufzubringenden Falzkraft können die längeren Zungen 17 abweichend vom Ausführungsbeispiel mit einem über ihren Biegebereich hinwegreichenden Durchbruch ausgestattet sein.

## Patentansprüche

1. Vorrichtung umfassend zwei miteinander verbundene, in ihrer Verbindungsebene weitestgehend aneinanderliegende Bauteile (10, 15), von denen zumindest eines mit einer herausgestellt angeordneten, plastisch verformbaren Zunge (17) versehen ist, welche das zweite Bauteil (15) in einem Durchbruch (12) durchdringt und welche im Durchdringungszustand derart plastisch verformt ist, daß die verbindenden Bauteile (10, 15) kraft-und/oder formschlüssig zusammengehalten sind, **dadurch gekennzeichnet,** daß beide Bauteile (10, 15) mit einer herausgestellt angeordneten Zunge (13, 17) versehen sind, welche eine annähernd gleiche Ausstellrichtung aufweisen und verschieden lang ausgebildet sind, wobei die kürzere der Zungen (13, 17) zumindest im Nahbereich des Durchbruches (12) angeordnet und in einer annähernd parallelen Ebene zu der den Durchbruch (12) durchdringenden längeren Zunge (17) liegt, welche gegen das freie Ende der kürzeren Zunge (13) abgebogen ist.

2. Vorrichtung nach Anspruch 1, **dadurch gekennzeichnet,** daß der Durchbruch (12) durch Herausstellen der kürzeren Zunge (13) aus einem dünnwandigen, plastisch verformbaren Bereich (11) an einem der Bauteile (10, 15) erzeugt ist.

3. Vorrichtung nach einem der Ansprüche 1 oder 2, **dadurch gekennzeichnet,** daß der Durchbruch (12) mit seinem der Wurzel der kürzeren Zunge (13) gegenüberliegenden Rand als Anschlag für den Zungenkörper der längeren Zunge (17) dient.

4. Vorrichtung nach einem der Ansprüche 1 bis 3, **dadurch gekennzeichnet,** daß jede der Zungen (13, 17) durch spanloses Ausschneiden aus einem dünnwandigen, plastisch verformbaren Bereich(11, 16) eines Bauteiles (10. 15) herausgestellt ist.

5. Vorrichtung nach einem der Ansprüche 1 bis 4, **dadurch gekennzeichnet,** daß beide Zungen (13, 17) einen annähernd bezüglich ihres dünnwandigen Bereiches (11, 16) identischen Zwischenwinkel (α) aufweisen.

6. Vorrichtung nach Anspruch 5, **dadurch gekennzeichnet,** daß die beiden Zungen (13, 17) bezüglich ihres dünnwandigen Bereiches (11, 16) einen Zwischenwinkel (α) zwischen 10° und 90° einschließen, aber der Zwischenwinkel (α) vorzugsweise 30° beträgt.

7. Vorrichtung nach einem der Ansprüche 1 bis 6 , **dadurch gekennzeichnet,** daß die längere Zunge (17) zu der kürzeren Zunge (13) einen Längenunterschied zwischen 100 und 600 % aufweist, aber vorzugsweise einen Längenunterschied von 400 % besitzt.

8. Vorrichtung nach einem der Ansprüche 1 bis 7, **dadurch gekennzeichnet,** daß die kürzere Zunge (13) und die längere Zunge (17) eine annähernd gleiche Zungenbreite aufweisen.

9. Vorrichtung nach einem der Ansprüche 1 bis 8, **dadurch gekennzeichnet,** daß die längere Zunge (17) innerhalb ihrer Breite zumindest in ihrem Umformbereich einen Durchbruch aufweist.

10. Vorrichtung nach Anspruch 8, **dadurch gekennzeichnet,** daß der Durchbruch symmetrisch zur Breite der längeren Zunge (17) angeordnet ist.

11. Vorrichtung nach einem der Ansprüche 1 bis 10, **dadurch gekennzeichnet,** daß die Zungen (13, 17) weitestgehend ebenflächig ausgebildet sind.

## Claims

1. Device comprising two interconnected components (10, 15), which largely lie against one another in their connecting plane and of which at least one is provided with a plastically deformable tongue (17), which is arranged to be set out, penetrates the second component (15) in a passage (12) and is plastically deformed in the state of penetration in such a manner that the connecting components (10, 15) are held together in force-locking and/or shape-locking manner, characterised in that the two components (10, 15) are provided with tongues (13, 17), which are arranged to be set out, have an approximately equal offset direction and are constructed to be of different length, wherein the shorter of the tongues (13, 17) is arranged at least in the vicinity of the passage (12) and lies in a plane approximately parallel to the longer tongue (17), which penetrates the passage (12) and which is bent over against the free end of the shorter tongue (13).

2. Device according to claim 1, characterised in that the passage (12) is produced by setting out the shorter tongue (13) from a thin-walled, plastically deformable region (11) at one of the components (10, 15).

3. Device according to one of claims 1 and 2, characterised in that the passage (12) serves by its edge, which is opposite the root of the shorter tongue (13), as an abutment for the tongue body of the longer tongue (17).

4. Device according to one of claims 1 to 3, characterised in that each of the tongues (13, 17) is set out by non-cutting blanking-out from a thin-walled, plastically deformable region (11, 16) of one component (10, 15).

5. Device according to one of claims 1 to 4, characterised in that the two tongues (13, 17) have an approximately identical intermediate angle (α) with respect to their thin-walled region (11, 16).

6. Device according to claim 5, characterised in that the two tongues (13, 17) include an intermediate angle (α) of between 10° and 90° with respect to their thin-walled region (11, 16), the intermediate angle (α) preferably, however, amounting to 30°.

7. Device according to one of claims 1 to 6, characterised in that the longer tongue (17) has a length difference between 100 and 600 % relative to the shorter tongue (13), but preferably has a length difference of 400 %.

8. Device according to one of claims 1 to 7, characterised in that the shorter tongue (13) and the longer tongue (17) have an approximately equal tongue width.

9. Device according to one of claims 1 to 8, characterised in that the longer tongue (17) has a passage within its width at least in its region of turning around.

10. Device according to claim 8, characterised in that the passage is arranged symmetrically relative to the width of the longer tongue (17).

11. Device according to one of claims 1 to 10, characterised in that the tongues (13, 17) are constructed to be largely flat surfaced.

## Revendications

1. Dispositif comprenant deux éléments constitutifs (10, 15) raccordés entre eux et, dans leur plan de raccordement, essentiellement contigus l'un à l'autre, dont l'un au moins est muni d'une languette (17) déformable plastiquement et disposée en saillie, laquelle pénètre le deuxième élément constitutif (15) dans une rupture (12) et laquelle, dans l'état de pénétration, est déformable plastiquement de telle sorte que les éléments constitutifs (10, 15) de raccordement sont maintenus ensemble par adhérence et/ou par concordance des formes, caractérisé en ce que les deux éléments constitutifs (10, 15) sont munis d'une languette (13, 17) disposée en saillie, lesquelles languettes saillissent approximativement dans la même direction et sont de longueur différente, la plus courte des languettes (13, 17) étant placée au moins à proximité de la rupture (12) et dans un plan approximativement parallèle à la languette plus longue (17) traversant la rupture (12), laquelle est repliée contre l'extrémité libre de la languette plus courte (13).

2. Dispositif selon la revendication 1, caractérisé en ce que la rupture (12) est obtenue en faisant saillir la languette plus courte (13) d'une partie (11) à paroi mince et déformable plastiquement prévue sur l'un des éléments constitutifs (10, 15).

3. Dispositif selon l'une des revendications 1 ou 2, caractérisé en ce que la rupture (12) avec son bord opposé à la racine de la languette plus courte (13) sert de butée pour le corps de languette de la languette plus longue (17).

4. Dispositif selon l'une des revendications 1 à 3, caractérisé en ce que chacune des languettes (13, 17) est saillante par découpage sans enlèvement de copeaux dans une partie (11, 16) à paroi mince et déformable plastiquement d'un élément constitutif (10, 15).

5. Dispositif selon l'une des revendications 1 à 4, caractérisé en ce que les deux languettes (13, 17) présentent un angle intermédiaire (α) approximativement identique par rapport à leur partie (11, 16) à paroi mince.

6. Dispositif selon la revendication 5, caractérisé en ce que les deux languettes (13, 17) enferment par rapport à leur partie (11, 16) à paroi mince un angle intermédiaire (α) compris entre 10° et 90°, mais en ce que l'angle intermédiaire (α) est de préférence de 30°.

7. Dispositif selon l'une des revendications 1 à 6, caractérisé en ce que la languette plus longue (17) présente par rapport à la languette plus courte (13) une différence de longueur comprise entre 100 et 600 %, mais possède de préférence une différence de longueur de 400 %.

8. Dispositif selon l'une des revendications 1 à 7, caractérisé en ce que la languette plus courte (13) et la languette plus longue (17) présentent une largeur de languette approximativement identique.

9. Dispositif selon l'une des revendications 1 à 8, caractérisé en ce que la languette plus longue (17) présente dans sa largeur, au moins dans sa partie de déformation, une rupture.

10. Dispositif selon la revendication 8, caractérisé en ce que la rupture est disposée symétriquement par rapport à la largeur de la languette plus longue (17).

11. Dispositif selon l'une des revendications 1 à 10, caractérisé en ce que les languettes (13, 17) sont essentiellement à surface plane.
